# EUROPEAN PATENT SPECIFICATION

(11) **EP 1 599 522 B1**
(45) Date of publication and mention of the grant of the patent: **01.07.2009**
(21) Application number: 04717400.8
(22) Date of filing: 04.03.2004
(51) Int. Cl.: C08G 18/08, C08G 18/40, C08G 18/48, C08G 18/66

(54) **THERMOPLASTIC POLYURETHANES**
THERMOPLASTISCHE POLYURETHANE
POLYURETHANNES THERMOPLASTIQUES

(30) Priority: 04.03.2003 US 451703 P; 24.02.2004 US 785529
(43) Date of publication of application: 30.11.2005
(73) Proprietor: Lubrizol Advanced Materials, Inc., Cleveland, OH 44141-3247 (US)
(72) Inventor: MELTZER, Donald A., Akron, OH 44333 (US); WIESSNER, Robert J., 5531 XG Bladel (NL)
(74) Representative: Weber, Thomas
(86) International application number: PCT/US2004/006508
(87) International publication number: WO 2004/078816

(56) References cited:
- US-A- 4 124 572
- US-A- 4 306 052
- US-A- 4 371 684
- US-A- 6 022 939
- US-A- 6 140 453
- PATENT ABSTRACTS OF JAPAN vol. 2000, no. 19, 5 June 2001 (2001-06-05) & JP 2001 048949 A (KURARAY CO LTD), 20 February 2001 (2001-02-20)

## Description

### FIELD OF THE INVENTION

Desired combinations of physical properties such as slow annealing, relatively low sensitivity of the complex viscosity to changes in shear rates, reduced crystallinity, and good hydrolytic resistance are imparted to thermoplastic polyurethanes when small amounts of a copolyether and a co-chain extender are utilized.

### BACKGROUND OF THE INVENTION

U.S.-A-6,140,453, assigned to Merquinsa Mercados Quimicos, S.L. of Montmelo, Spain relates to specific polyurethane polymers of the formulation set forth therein.

EP-A-0 953 586, assigned to Merquinsa Mercados Quimicos, S.L. of Montmelo, Spain relates to specific polyurethane polymers of the formulation set forth therein.

U.S.-A-4,245,081, assigned to Bayer Aktiengesellschaft of Leverkusen, Germany relates to a continuous process for the production of thermoplastic polyurethanes by reacting A. one or more substantially linear polyols having molecular weights in the range from 400 to 10,000, B. one or more organic diisocyanates and C. a hydroxyl-group-containing chain extender having a molecular weight below 250, the ratio of the NCO-groups in component (B) to the Zerewitinoff-active groups in components (A) and (C) lying between 0.90 and 1.2, in extruders, characterized in that the chain extender (C) used is a mixture of at least two different glycols, of which one is present in a quantity of from 50 to 99% by weight, based on the total amount of component (C), and a second in a quantity of from 1 to 50% by weight, based on the total amount of component (C).

U.S.-A-4,371,684, assigned to Bayer Aktiengesellschaft of Leverkusen, Germany relates to a process extruding or melt roll calendering thermoplastic polyurethanes wherein the polyurethanes used are synthesized from p1 (a) one or more polyurethanes wherein the polyurethanes used are synthesized from pl (a) one or more relatively high molecular weight substantially linear polyols having molecular weights in the range from 400 to 10,000 (b) diphenyl methane and/or hexamethylene diisocyanate and (c) a mixture of 85 to 99% by weight of 1,4-butane diol and 1 to 15% by weight of at least one co-extender selected from the group consisting of ethylene glycol, diethylene glycol, triethylene glycol, diethylene 1,2-propane diol, 1,3-butane diol, 1,6-hexane diol, 2-ethyl-1,3-hexane diol, 2,2-dimethyl-1,3-propane diol, 1,4-bis-hydroxymethyl cyclohexane, hydroquinone-bis-hydroxyethyl ether, and mixtures thereof, the equivalent ratio of NCO groups in component (B) to the Zerewitinoff-active hydrogen atoms in components (A) and (C) being from 0.9:1 to 1.2:1 and the molar ratio of component (A) to (C) being from 1:20 to 5:1.

U.S.-A-6,022,939, assigned to Bayer Aktiengesellschaft of Leverkusen, Germany relates to A thermoplastic polyurethane elastomer is disclosed obtained by reacting A) diisocyanates, B) polyhydroxy compounds and/or polyamines, with C) as chain extenders mixtures of C1) benzene substituted with at least two hydroxyalkyl, hydroxyalkoxy, aminoalkyl and/or aminoalkoxy groups and C2) an alkanediol with 4 to 44 C atoms. The reaction is further characterized in that the molar ratio C1 to C2=60 to 40 to 95 to 5 and in that the equivalent ratio of NCO groups to the sum of the NCO-reactive groups is about 0.9 to 1.20.

### SUMMARY OF THE INVENTION

Thermoplastic polyurethanes are made utilizing a mixture of polyester and polyether polyols, polyisocyanates which are predominately diisocyanates, and primary chain extenders and a co-chain extender. Small amounts of the polyether polyol are utilized to improve hydrolytic resistance and improve rheological characteristics and small amounts of an asymmetric or a different length co-chain extender are utilized to reduce crystallinity, reduce the sensitivity to annealing, improve rheological characteristics and hydrolytic resistance. It is an important aspect of the present invention to utilize specific ratios of the polyether copolyol to the polyester polyol, specific molar ratios of the co-chain extender to the primary chain extender and specific ratios of the co-chain extender to the copolyol to achieve suitable properties.

### DETAILED DESCRIPTION OF THE INVENTION

The thermoplastic polyurethanes of the present invention are generally made by combining and reacting a) at least one polyester polyol component having at least one and desirably two hydroxyl end groups, b) at least one polyisocyanate component which preferably is a diisocyanate and, c) at least one primary or symmetric chain extender, optionally, but preferably with a catalyst. It is an important aspect of the present invention to utilize a specific range of polyether copolyol with the polyester polyol as well as to utilize a specific range of a co-chain extender with the symmetric chain extender. The thermoplastic polyurethane are preferentially made in a twin screw extruder.
In particular, the present invention relates to the thermoplastic polyurethane composition of claim 1 and a process of claim 44 for producing said thermoplastic polyurethane composition. Preferred embodiments of the invention are apparent from the dependent claims.

### POLYOLS

The thermoplastic polyurethanes of the present invention comprise hydroxyl terminated polyester polyols. These polyesters are generally linear and have number average molecular weight, Mn, typically in the range of 500 to 5,000, desirably from 600 to 4,000, and preferably from 700 to 2,500. The number average molecular weight can be determined, for example, by assay of the number of terminal functional groups for a given weight of polymer. Suitable hydroxyl terminated polyesters generally have an acid number of 1.3 or less and typically 0.8 or less. The acid number refers to the number of milligrams of potassium hydroxide needed to neutralize one gram of the hydroxyl terminated polyester.

As know to the art and to the literature, the hydroxyl terminated polyester polymers can be produced by either 1) an esterification reaction of one or more dicarboxylic acids, or anhydrides using one or more glycols or, 2) an esterification reaction of one or more esters of dicarboxylic acids with one or more glycols. An, excess mole ratio of glycol to acid or anhydride is utilized so as to achieve a preponderance of terminal hydroxyl groups.

Suitable dicarboxylic acids for preparing a hydroxyl terminated polyester intermediate can be aliphatic, cycloaliphatic, aromatic or combinations thereof. A single dicarboxylic acid or a combination of dicarboxylic acids can be used. Typically, the dicarboxylic acids have a total of from 4 to 15 carbon atoms. Examples of suitable dicarboxylic acids include succinic, glutaric, adipic, pimelic, suberic, azelaic, sebacic, dodecanedioic, isophthalic, terephthalic, and cyclohexane dicarboxylic acids, and the like. Anhydrides of the above dicarboxylic acids, such as phthalic anhydride, tetrahydrophthalic anhydride, and the like, can also be used. Preferred acids include adipic, suberic, sebacic and azelaic.

If the transesterification route for formation of the hydroxyl terminated polyester is utilized, esters of the dicarboxylic acids described above can be used. These esters typically include an alkyl group, usually having 1 to 6 carbon atoms, in place of the acidic hydrogen of the corresponding acid functionalities.

The glycols which are reacted to form the hydroxyl terminated polyester intermediate can be aliphatic, aromatic, or combinations thereof. The glycols typically have a total of from 2 to 12 carbon atoms. Suitable glycols include, for example, ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol, dodecamethylene glycol, and the like. Preferred glycols include 1,4-butanediol and 1,6-hexanediol.

The hydroxyl terminated polyester intermediates or polyols of the present invention are commercially available from Crompton Corp as Fomrez^{®}, Inolex as Lexorez^{®}, or from Polyurethane Specialties as Millester^{®}.

In order to improve properties such as hydrolytic resistance and rheological characteristics such as reduced sensitivity of the complex viscosity to angular frequency or shear rate, it is an important aspect of the present invention is to utilize a copolyol of at least one polyether polyol in small amounts such as from 1 to 50, desirably from 2 to 25, and preferably from 5 to 20 parts by weight per 100 parts by weight of total amount polyol, i.e., amount of the one or more polyether polyols and that of the one or more polyester polyols.

In order to achieve the desired properties for the thermoplastic polyurethane, only specific types of copolyols are utilized, i.e. hydroxyl terminated polyether polyols. The polyether intermediates or polyols are derived from a diol or polyol having from 2 to 15 carbon atoms and preferably from 2 to 6 carbon atoms. The hydroxyl terminated polyether intermediates can be formed from the reaction of an alkyl diol or glycol with an ether, such as an alkylene oxide having from 2 to 6 carbon atoms.

The polyether intermediate can be either a homopolymer or a copolymer. For example, a hydroxyl terminated polyether copolymer polyol can be produced by first reacting propylene glycol with propylene oxide followed by a subsequent reaction with ethylene oxide. Examples of suitable polyether polyols include, but are not limited to, poly(ethylene oxide) which can be formed by reacting ethylene oxide with ethylene glycol; poly(propylene oxide), which can be formed by reacting propylene oxide with ethylene glycol; poly(propylene oxide-co-ethylene oxide), which can be formed by reacting propylene oxide and ethylene oxide with ethylene glycol; and poly(tetramethylene ether glycol) derived from tetrahydrofuran.

The polyether copolyols of the present invention have number average molecular weights generally from 100 to 10,000, desirably from 250 to 5,000, and preferably from 500 to 4,000, as determined by assay of the number of terminal functional groups for a given weight of polymer. Blends of various polyols can be utilized in the present invention. Suitable polyether polyols are commercially available from Bayer Corporation as Arcol^{®}, Acclaim^{®} or Multranol^{®}; Dupont as Terathane^{®}; Arch as Poly G^{®}; and The BASF Corporation as PolyTHF^{®}. Preferred polyether polyols include poly(ethylene oxide), poly(propylene oxide) and poly(ethylene oxide-co-polypropylene oxide), with poly(tetramethylene ether glycol) (PTMEG) being especially preferred.

### POLYISOCYANATE

The polyisocyanates of the present invention generally have the formula R(NCO)ₙ, where n is usually an integer of 2 to 4 with 2 being preferred R can be an aromatic, cycloaliphatic, an aliphatic, or combinations thereof having from 2 to 20 carbon atoms. Examples of polyisocyanates include, but are not limited to, diphenylinethane-4,4'- diisocyanate (MDI); toluene-2,4-diisocyanate (TDI); toluene-2,6-diisocyanate (TDI); methylene *bis* (4-cyclohexylisocyanate (H₁₂ MDI); 3-isocyanatomethyl-3,5,5-trimethyl-cyclohexyl isocyanate (IPDI); 1,6-hexane diisocyanate (HDI); naphthalene-1,5-diisocyanate (NDI); 1,3- and 1,4-phenylenediisocyanate; triphenylmethane-4,4',4"-triisocyanate; polyphenylpolymethylenepolyisocyanate (PMDI); m-xylene diisocyanate (XDI); 1,4-cyclohexyl diisocyanate (CHDI); isophorone diisocyanate; isomers and mixtures or combinations thereof. The preferred isocyanates are MDI and H₁₂MDI.

### CHAIN EXTENDERS

The primary or majority chain extenders of the present invention are desirably symmetric, that is possess 2 and preferably 3 elements of symmetry, including, for example, rotation reflection and rotation inversion axes, such as unbranched, unsubstituted straight chain alkane diols free of heteroatoms other than in the functional groups with zerewitinoff hydrogens, e.g., oxygens in the hydroxyl groups, certain cycloaliphatic diols, or certain alkylaryl diols. Examples include 1,6-hexanediol, 1,3-propanediol, 1,5-pentanediol,1,4-butanediol, 1,4-cyclohexanedimethanol (CHDM), hydroquinone di(β-hydroxyethyl) ether (HQEE), and 1,4-benzenedirnethylol. 1,4-butanediol (1,4-BDO) is preferred.

In order to obtain improved properties such as better hydrolytic resistance and reduced tendency to anneal, it is desirable to use small amounts of a co-chain extender which desirably is asymmetric, has a different chain length or is non-linear, in order to reduce crystallinity of the thermoplastic polyurethane. Acyclic chain extenders that contain one or more heteroatom other than in the functional groups with zerewitinoff hydrogens, e.g., oxygens in the hydroxyl groups, are also desirably used as co-chain extenders. Co-chain extenders thus include 1,3-butanediol, neopentyl glycol, diethylene glycol, dipropylene glycol, di(β-hydroxyethyl) resorcinol and 1,2-propylene glycol with 1,3-butanediol (1,3-BDO) and dipropylene glycol (DPG) being preferred. The total amount of the one or more co-chain extenders is generally from 1 to 50, desirably from 2 to 25, and preferably from 5 to 10 moles per every 100 moles of the primary chain extender such as 1,4-butanediol.

### MOLE RATIO OF COMPONENTS

The overall total mole ratio of the one or more diisocyanates to all of the various dihydroxyl terminated compounds, that is the one or more polyester polyols, the one or more polyether copolyols, the primary chain extender, and the one or more co-chain extenders is from 0.95 to 1.05 and desirably from 0.98 to 1.03. The mole ratio of the chain extenders, that is the primary chain extender and the one or more co-chain extenders, to the polyols, that is the one or more polyester polyols and the one or more polyether polyols, is generally from 0.4 to 10, desirably from 0.6 to 5, and preferably from 0.7 to 3. The mole ratio of the co-chain extender to the wt % of the polyether copolyol is generally from 0.1 to 10, desirably from 0.15 to 3, and preferably from 0.2 to 2. This mole ratio of co-chain extender to the wt.% of polyether polyol is important inasmuch as it imparts lower crystallinity.

### CATALYSTS

Generally any conventional thermoplastic polyurethane catalyst known to the literature and to the art can be utilized in preparing the thermoplastic polyurethane of the present invention. Such catalysts include organic and inorganic acid salts of, and organometallic derivatives of, bismuth, tin, iron, antimony, cobalt, thorium, aluminum, zinc, nickel, cerium, molybdenum, vanadium, copper, manganese and zirconium, as well as phosphines and tertiary organic amines. Representative organotin catalysts have from 6 to 20 carbon atoms and include stannous octoate, dibutyltin dioctoate, dibutyltin diluarate, and the like. Representative tertiary organic amine catalysts include triethylamine, triethylenediamine, N,N,N'N'-tetramethylethylenediamine, N,N,N'N'-tetraethylethylenediamine, N-methylmorpholine, N-ethylmorpholine, N,N,N',N'-tetramethylguanidine, N,N,N',N'-tetramethyl-1,3-butanediamine, N,N-dimethylethanolamine, N,N-diethylethanolamine, and the like. Representative polyalcohol amine catalysts include triethanolamine, diethanolamine, or bis(2-hydroxyethyl)amino-2-propanol, and the like.

The amount of catalyst employed is generally less than 1000 and desirably less than 400 parts by weight per million parts by weight of the total weight of the polyisocyanate(s), the polyol components, and the chain extenders. Mixtures of the above noted catalysts can likewise be utilized. It is desirable to use minimal amounts of the catalyst in order to minimize side reactions. Preferred catalysts include stannous octoate, dibutyltin dioctoate, dibutyltin dilaurate, and bismuth octoate.

### ADDITIVES

In addition to the above-identified components, the polyurethane compositions of the present invention can also contain various additives, fillers, pigments, or dyes, and the like, utilized in conventional amounts which are well known to the art and to the literature. Generally additives are utilized which impart desired properties to the thermoplastic polyurethanes such as various antioxidants, various ultraviolet light inhibitors, waxes such as amide waxes and ester waxes, thickening agents, and the like. The fillers, when utilized, are generally mineral fillers, that is inorganic, and include ground mica, talc, kaolin clay, calcium carbonate, calcium sulfite, colloidal silica, fumed silica, wollastonite, hollow glass microspheres, glass, carbon and graphite fibers, various metallic oxides such as zinc, titanium zirconium, and the like, ground quartz, various metallic silicates, metallic powders such as lead, aluminum, bronze, and the like.

If it is desired that the thermoplastic polyurethane composition of the present invention have a color or hue, any conventional pigment or dye can be utilized in conventional amounts. Hence, any pigment known to the art and to the literature can be utilized as for example titanium dioxide, iron oxide, carbon black, and the like, as well as various dyes provided that they do not interfere with the various urethane reactions.

The polyurethanes of the present invention have A Shore hardness, as measured according to ASTM D-2240, generally 98A or less, desirably from 70A to 98A, and preferably from 80A to 98A.

### REACTION PROCEDURES

The thermoplastic polyurethanes of the present invention can be prepared by various methods known to the art and the literature. For example, a two-step process can be utilized wherein the polyester polyol and the polyether copolyol are reacted with at least one diisocyanate to form a prepolymer which is subsequently chain extended with the above- noted chain extenders. A preferred process is a one-shot procedure wherein generally all the reactants are brought together and substantially simultaneous reacted. A highly preferred procedure is a random melt polymerization process wherein the polyester polyol, the polyether copolyol, the linear chain extender, and the different length chain extender as well as the catalyst are brought together and mixed at a temperature of from 60°C to 100°C. The blend is then heated to a temperature of from 110°C to 200°C, and preferably from 120°C to 180°C. The diisocyanate such as MDI is heated to temperatures in the same range as the blend, for example 120°C, and then mixed with the blend. The reactants are mixed thoroughly during the reaction period which is generally from 2 to 3 minutes. The reaction is exothermic and thus exhibits an increase of temperature generally greater than 70°C. A suitable reaction vessel is a twin screw extruder. Upon completion of the reaction, the polymers are discharged into a cold vessel and are allowed to cool to room temperature. Various physical tests of the thermoplastic polyurethane were then conducted.

The thermoplastic polyurethanes of the present invention can have a weight average molecular weight (Mw) of from 10,000 to 1,000,000, desirably from 30,000 to 250,000, and preferably from 60,000 to 120,000 as measured by gel permeation chromatography against a polystyrene standard.

The thermoplastic polyurethanes of the present invention as compared to simple polyester-based thermoplastic polyurethanes, where the polyurethane block is prepared from a single primary or symmetrical chain extender, generally have reduced crystallinity, reduced tendency to anneal, improved hydrolytic resistance or stability and lower sensitivity to shear.

Accordingly, the polyurethanes can be used to coat fabrics, or other substrates such as adhesive laminates or coatings. Suitable fabrics can be either woven or nonwoven such as polyester fibers, polyolefin fibers, nylon fibers, and the like. Industrial applications include coated films, sheets, or fabrics as for conveyer belts, collapsible storage bags (e.g., fuel, water, fruit juices, food oils, heating oils etc), inflatables (e.g., escape slides and platforms, floatation devices, air-mattresses, life jackets, white-water or life rafts, oil booms, petro-seals, power lifting devices, weather balloons) or grape press membranes, and the like. In the apparel industry, uses include labels and stickers used in laundry and professional outfits, as well as protective clothing/apparel, protective covers, rainwear, sealable coatings for labels, surgical drapes, protective apparel, synthetic leather, tents, upholstery, wet or diving suits, and the like. Other uses include liners for pipe repair, load space covers, and the like.

The polyurethanes can also be used to make unsupported TPU film and sheet via extrusion or calendering. Applications for such films and sheets include air mattresses, shower curtains, aeration sheets for water purification plants, adhesives, equipment covers, protective wear, aprons, body bags, tank liners, pipe liners, and the like.

The following examples serve to illustrate but not to limit the present invention.

The amount of co-chain extender and copolyol (PTMEG with Mn = 1000) listed in Table 1 were added to 25g of 1,4-BDO and mixed with an amount of poly(butylene adipate) (PBAd) such that the total weight of said mixture was 200g. The mixture was melted at 60°C and stirred thoroughly. The mixture was stirred and heated to 120°C. Hot MDI (60°C) in an amount consistent with the stoichiometry indicated in the table was added. The mixture was stirred for 3 minutes and then poured into a cool Teflon-coated pan. The material was then aged for 2 hour at 105°C. The invention is depicted by Examples 2, 3, 5, 9, 10, 12-14 and 16 while Examples 1, 4, 6-8, 11 and 15 are comparative examples or controls.

The above recipes were tested with regard to the following physical and rheometrical properties listed in Table 2.

**TABLE 1**

| **Formulations on which the invention and comparative examples are based** | | | | | | | | | | | | |
|---|---|---|---|---|---|---|---|---|---|---|---|---|
| | **Example** | **PBAd** | **1,4-BDO (g)** | **1,3-BDO (g)** | **DPG (g)** | **PTMEG (g)** | **Co-chain extender (mole %)** | **Copolyol (wt %)** | **Mole % co-chain extender to Wt % copolyol (PEt)** | **Melt Index (dg/min)** | **MDI Stoichiometry (%)** | **Mw** |
| Control | **1** | 172.5 | 25 | 2.5 | 0 | 0 | 10 | 0 | - | 48 | 97.8 | 81500 |
| Invention | **2** | 155.25 | 25 | 2.5 | 0 | 17.25 | 10 | 10 | 1.0 | 50 | 98.8 | 78000 |
| Invention | **3** | 138 | 25 | 2.5 | 0 | 34.5 | 10 | 20 | 0.5 | 38 | 98.8 | 94000 |
| Control | **4** | 173.75 | 25 | 1.25 | 0 | 0 | 5 | 0 | - | 54 | 97.8 | 74800 |
| Invention | **5** | 156.37 | 25 | 1.25 | 0 | 17.38 | 5 | 10 | 0.5 | 33 | 97.7 | 102000 |
| Control | **6** | 157.5 | 25 | 0 | 0 | 17.5 | 0 | 10 | 0 | 44 | 98.4 | 82200 |
| Control | **7** | 140 | 25 | 0 | 0 | 35 | 0 | 20 | 0 | 50 | 98.3 | 84300 |
| Control | **8** | 171.28 | 25 | 0 | 3.72 | 0 | 10 | 0 | - | 45 | 98.8 | 81200 |
| Invention | **9** | 154.15 | 25 | 0 | 3.72 | 17.13 | 10 | 10 | 1.0 | 70 | 98.3 | 69500 |
| Invention | **10** | 137.02 | 25 | 0 | 3.72 | 34.26 | 10 | 20 | 0.5 | 64 | 98.3 | 75800 |
| Control | **11** | 173.14 | 25 | 0 | 1.86 | 0 | 5 | 0 | - | 48 | 97.8 | 75800 |
| Invention | **12** | 155.83 | 25 | 0 | 1.86 | 17.31 | 5 | 10 | 0.50 | 24 | 99.4 | 100000 |
| Invention | **13** | 150.4 | 25 | 2.1 | 0 | 22.5 | 8.4 | 13 | 0.65 | 34 | 98.4 | 101000 |
| Invention | **14** | 139 | 25 | 1.25 | 0 | 34.75 | 5 | 20 | 0.25 | 39 | 98.3 | 87000 |
| Control | **15** | 175 | 25 | 0 | 0 | 0 | 0 | 0 | - | 40 | 98.3 | 150000 |
| Invention | **16** | 150.4 | 25 | 2.1 | 0 | 22.5 | 8.4 | 13 | 0.65 | 45 | 98.1 | 79000 |

**TABLE 2**

| **Physical properties and rheological characteristics of invention and illustrative examples are based** | | | | | | | | | | | | |
|---|---|---|---|---|---|---|---|---|---|---|---|---|
| | **Example** | **Tc (°C)** | **T_{CN}** | **Tg (°C)** | **Original tensile property** | | **Aged tensile property^{a}** | | **v_{f}(Tₘ+15)** | **v_{ft}((Tₘ+15)/(Tₘ+35))** | **v_{f}(Tₘ+35)** | **vₜ** |
| | | | | | **TS (psi)** | **TE** | **TS_{N}** | **TE_{N}** | | | | |
| Control | **1** | 76 | 0.90 | -14 | 4996 | 527 | 0.26 | 0.38 | 15 | 17 | 7.3 | 1.2 |
| Invention | **2** | 67 | 0.80 | -9 | 5454 | 547 | 0.37 | 0.73 | 4 | 6 | 2.4 | 1.8 |
| Invention | **3** | 67 | 0.80 | -9 | 5610 | 545 | 0.55 | 0.92 | 6 | 7 | 3.2 | 1.4 |
| Control | **4** | 78 | 0.93 | -17 | 4616 | 559 | 0.27 | 0.29 | 12 | 26 | 4.1 | 4.5 |
| Invention | **5** | 67 | 0.80 | -10 | 5539 | 587 | 0.46 | 0.89 | 4 | 6 | 2.2 | 2.9 |
| Control | **6** | 76 | 0.90 | -17 | 5561 | 590 | 0.27 | 0.58 | 6 | 9 | 3.0 | 4.9 |
| Control | **7** | 75 | 0.89 | -20 | 5522 | 604 | 0.39 | 0.79 | 5 | 8 | 2.2 | 4.7 |
| Control | **8** | 84 | 1.00 | -12 | 5548 | 516 | 0.50 | 1.03 | 6 | 10 | 3.4 | 2.4 |
| Invention | **9** | 75 | 0.89 | -14 | 4487 | 554 | 0.39 | 0.76 | 4 | 8 | 2.2 | 2.1 |
| Invention | **10** | 74 | 0.88 | -12 | 5117 | 584 | 0.49 | 0.86 | 5 | 7 | 2.3 | 3.3 |
| Control | **11** | 77 | 0.92 | -15 | 5269 | 565 | 0.23 | 0.39 | 6 | 10 | 2.2 | 4.4 |
| Invention | **12** | 74 | 0.88 | -11 | 5674 | 534 | 0.36 | 0.86 | 6 | 9 | 3.6 | 3.1 |
| Invention | **13** | 76 | 0.90 | -16 | - | - | - | - | 6 | 8 | 3.5 | 1.5 |
| Invention | **14** | 73 | 0.87 | -12 | - | - | - | - | 5 | 8 | 3.1 | 2.2 |
| Control | **15** | 84 | 1.00 | -15 | - | - | - | - | 7 | 13 | 3.3 | 4.8 |
| Invention | **16** | 79 | 0.94 | -15 | - | - | - | - | 5 | 9 | 2.4 | 3.1 |

| | | | | | | | | | | | | |
|---|---|---|---|---|---|---|---|---|---|---|---|---|
| a) aged for 4 weeks at 75°C and 95% relative humidity A dash "-" means that no data was obtained | | | | | | | | | | | | |

Tensile properties, specifically tensile strength, TS, and ultimate elongation, TE, were measured according to ASTM D-412/D-638. ,

Reduced crystallinity is determined from the change in the crystallization temperature listed in Table 2 as T_{C} as measured by DSC when the sample is heated to 250°C and then cooled at 10°C/min as compared to a control containing a similar primary chain extender content and optionally one or more polyester polyols, i.e. a standard or conventional thermoplastic polyurethane not containing any polyether polyol or co-chain extender, i.e., Example 15. Reduced crystallinity is thus defined as the T_{C} normalized to that of said standard TPU, T_{CN}. According to the invention the values of T_{CN} must be generally 0.95 or less, desirably 0.90 or less, and preferably 0.85 or less.

Hydrolytic stability is demonstrated by comparing the tensile strength exhibited by the samples following aging for 4 weeks at 75°C and 95% relative humidity to that exhibited prior to aging or normalized tensile strength, TS_{N}. According to the invention the values of this parameter must be greater than 0.3, and preferably greater than 0.35.

The melt index (MI) was measured at 190°C and 8.7 kg, Mw was measured by dissolving the samples in THF and injecting the solution into a GPC apparatus, using polystyrene of known Mw as standards.

Rheological measurements were performed on a Physica UDS 200 Universal Dynamic Spectrometer System using a MP306 (25mm,0°) HT spindle. The spindle and plate are heated to 190°C. The pre-dried sample (1.6 g) is placed at the mid range of the heated plate and the distance between top of the plate and bottom of the spindle is adjusted to 3 mm and left in that position for 1 minute. The distance between the spindle and plate is then readjusted to 2 mm and again held in this position for 1 minute.

The gap is then decreased to between top of the bottom plate and bottom of the spindle is 1 mm which is used as is the measuring gap.

Prior to beginning measurements, the system is left at this gap and temperature for 1 minute, making sure that the gap is filled with sample. Superfluous product is removed from the bottom plate taking care that the outer surface of the cone is not covered with sample. Time, temperature and frequency dependent measurements are run according to the profiles summarized in the Tables 3 and 4.

The temperatures for rheological measurements were selected by comparison to the melting temperature, Tₘ, a conventional TPU of similar composition but without the co-chain extender nor co-polyol. For the examples given and based on Example 15, Tₘ = 155°C.

The reduced sensitivity to shear is determined by monitoring the frequency dependence of the viscosity (V_{f}) as calculated by dividing the complex viscosity ratio at 6 s⁻¹ to that observed at 600 s⁻¹ measured at a temperature equal to 15°C above the Tₘ of the conventional TPU, 170°C, V_{f} (Tₘ+15) and 35°C above the Tₘ, 190°C, V_{f} (Tₘ+35). Suitable V_{f} (Tₘ+15) values are 10 or less and preferably 6 or less whereas suitable V_{f} (Tₘ+35) values are desirably 5 or less and preferably 4 or less.

The sensitivity of the complex viscosity to temperature is determined by taking the ratio of the complex viscosity measures at 170°C and 6s⁻¹ to that measured at 190°C and 600s⁻¹, i.e. V_{fT} ((Tₘ+15)/(Tₘ+35)). According to the invention, the values of this parameter must be desirably 10 or less and preferably 9 or less.

Reduced annealing is determined by the time dependent viscosity ratio, final/initial, (Vₜ) when the sample was left at Tₘ+15, 170°C, for 30 minutes. According to the invention, the values of this parameter must be 4.0 or less, and preferably 3.5 or less.

To be in compliance with the present invention, generally a majority, desirably at least 5 and preferably all 6 of the above numerical criteria must be met.

**Table 3**

| **Frequency and temperature sweep measurement** | | |
|---|---|---|
| **Interval** | **Program settings** | **Description** |
| 1 | Temperature: constant 190°C | Sample tempering. |
| | Interval duration: 1 minute | |
| 2 | Temperature: constant 190°C | Frequency sweep measurement of the sample at 190°C. |
| | Amplitude: constant 5% | |
| | Frequency: ramp log 100 -1 Hz | |
| | (reverse profile) | |
| | Number of data points: 40 | |
| 3 | Temperature: ramp lin 190°C - 180°C | Cooling. |
| | Cooling rate: 10°C/min | |
| | Interval duration: 1 min | |
| 4 | Temperature: constant 180°C | Sample tempering. |
| | Interval duration: 1 minute | |
| 5 | Temperature: constant 180°C | Frequency sweep measurement of the sample at 180°C. |
| | Amplitude: constant 5% | |
| | Frequency: ramp log 100 -1 Hz | |
| | (reverse profile) | |
| | Number of data points: 40 | |
| 6 | temperature: ramp lin 180°C -170°C | Cooling |
| | Cooling rate: 10°C/min | |
| | Interval duration: 1 min | |
| 7 | Temperature: constant 170°C | Sample tempering. |
| | Interval duration: 1 minute | |
| 8 | Temperature: constant 170°C | Frequency sweep measurement of the |
| | Amplitude: constant 5% | sample at 170°C. |
| | Frequency: ramp log 100 -1 Hz | |
| | (reverse profile) | |
| | Number of data points: 40 | |
| 9 | Temperature: ramp lin 170°C - 190°C | Switch over from frequency sweep to temperature sweep measurement. |
| | Heating rate: 10°C/min | |
| | Interval duration 2 min | |
| 10 | Temperature: constant 190°C | Sample tempering. |
| | Interval duration: 1 minute | |
| 11 | Temperature: ramp lin 190°C - 140°C | Temperature sweep measurement. |
| | Cooling rate: 10°C/min | |
| | Interval duration: 5 min | |
| | Amplitude: constant 5% | |
| | Frequency: constant 50 Hz | |
| | Number of data points: 40 | |

## Claims

1. A thermoplastic polyurethane composition, comprising:
the reaction product of a polyester polyol having a number average of molecular weight of from 500 to 5,000;
from 1 to 50 parts by weight of a polyether co-polyol comprising poly(tetramethylene ether glycol), poly(propylene oxide), poly(propylene oxide-coethylene oxide), polyethylene oxide or combinations thereof per 100 parts by weight of the total amount of said polyol; a polyisocyanate having the formula R (NCO)ₙ where n is an integer of from 2 to 4 and R is an aromatic, cycloaliphatic, aliphatic, or combinations thereof having from 2 to 20 carbon atoms; a symmetrical chain extender; from 1 to 50 moles of a co-chain extender that is asymmetric or of a different chain length or is non-linear or contains a heteroatom co-chain extender per 100 moles of said symmetric chain extender; the molar ratio of said co-chain extender to weight percent of said polyether polyol being from 0.1 to 10.

2. A thermoplastic polyurethane composition according to claim 1, wherein said co-chain extender comprises 1,3-butanediol, neopentyl glycol, diethylene glycol, dipropylene glycol, di(β-hydroxyethyl) resorcinol or 1,2-propylene glycol, or combinations thereof; and wherein said reaction product has a reduced annealing value, Vₜ, of 4.0 or less and a sensitivity of the complex viscosity to temperature V_{ft}(Tₘ+15)/(Tₘ+35)) of 9 or less.

3. A thermoplastic polyurethane composition according to claim 2, wherein said symmetric chain extender comprises 1,6-hexanediol, 1,3-propanediol, 1,5-pentanediol, 1,4-butanediol, 1,4-cyclohexanedimethanol (CHDM), hydroquinone di(p-hydroxyethyl) ether (HQEE), or 1,4-benzenedimethylol, or combinations thereof;
wherein said reaction product has a sensitivity to shear V_{f} at Tₘ+15°C of 10 or less or a V_{f} at Tₘ+35° C of 5 or less;
wherein the amount of said polyether co-polyol is from 2 to 25 parts by weight per 100 parts by weight of said polyester polyol, and wherein said molar ratio of said co-chain extender to the weight percent of said polyether polyol is from 0.15 to 3.

4. A thermoplastic polyurethane composition according to claim 3, wherein the number average molecular weight of said polyester co-polyol is from 600 to 4,000; and
wherein the number average molecular weight of said polyether polyol is from 250 to 5,000, and
wherein said reaction product has a hydrolytic stability, TS_{N}, of 0.3 or greater.

5. A thermoplastic polyurethane composition of claim 4 wherein said polyether polyol is selected from the group consisting of poly (tetramethylene ether glycol), poly (ethylene oxide), poly (propylene oxide), poly (propylene oxide-co-ethylene oxide), and mixtures thereof.

6. A thermoplastic polyurethane composition of claim 5 wherein said co-chain extender is neopentylglycol, dipropylene glycol, 1,3-butanediol, or mixtures thereof.

7. A thermoplastic polyurethane composition according to claim 6, wherein said reduced annealing value Vₜ is 3.5 or less, wherein said V_{f} at Tₘ+15°C is 6 or less, and said V_{f} at Tₘ+35°C is 4 or less, wherein said polyether polyol is poly(tetramethylene ether glycol), wherein said diisocyanate is MDI or H₁₂MDI, or combinations thereof, wherein said symmetrical chain extender is 1,4-butanediol; and
wherein the molar ratio of said co-chain extender to the weight percent of said polyether polyol is from 0.1 to 10; and
wherein said co-chain extender is 1,3-butanediol, neopentylglycol, or dipropylene glycol.

8. A thermoplastic polyurethane composition of claim 7 wherein the molar ratio of said co-chain extender to the weight percent of said polyether polyol is from 0.15 to 3, preferably from 0.2 to 2.

9. A thermoplastic polyurethane composition according to claim 7, wherein said polyester polyol is derived from adipic acid, suberic acid, sebacic acid, or azelaic acid, or combinations thereof with 1,4-butanediol, 1,6-hexanediol, neopentyl glycol, diethylene glycol, or combinations thereof.

10. The thermoplastic polyurethane composition of claim 1, wherein said co-chain extender is used at a level of from 5 to 10 moles per 100 moles of said symmetrical chain extender.

11. The thermoplastic polyurethane composition of claim 10, wherein said polyether co-polyol is used at a level of from 5 to 20 parts by weight per 100 parts by weight of the total amount of said polyol.

12. An article comprising the thermoplastic polyurethane composition of any of claims 1 to 11 wherein said article is selected from a sheet, a film, a conveyor belt, an inflatable article, an apparel, a storage bag or a coated fabric wherein said coating comprises said thermoplastic polyurethane composition.

13. The article of claim 12, wherein said coated fabric comprises nylon, polyester, or polyolefin.

14. A process for producing a thermoplastic polyurethane polymer comprising reacting :
A. a polyester polyol having a number average molecular weight of from 500 to 5,000;
B. from 1 to 50 parts by weight of a polyether co-polyol comprising poly(tetramethylene ether glycol), poly(propylene oxide), poly(propylene oxide-coethylene oxide), polyethylene oxide or combinations thereof per 100 parts by weight of the total amount of said polyol;
C. a polyisocyanate having the formula R (NCO)ₙ where n is an integer of from 2 to 4 and R is an aromatic, cycloaliphatic, aliphatic, or combinations thereof having from 2 to 20 carbon atoms;
D. a symmetrical chain extender;
E. from 1 to 50 moles of a co-chain extender that is asymmetric or of a different chain length or is non-linear or contains a heteroatom co-chain extender per 100 moles of said symmetrical chain extender; and
wherein the molar ratio of said co-chain extender to weight percent of said polyether polyol is from 0.1 to 10.

15. The process of claim 14 further comprising a thermoplastic polyurethane catalyst in an amount less than 1000 parts by weight per million parts by weight of the combined weight of said polyester polyol, polyether co-polyol, polyisocyanate, symmetrical chain extender and said co-chain extender.

16. The process of claim 15 wherein said process is conducted in a twin screw extruder where the reactants are brought together and substantially simultaneous reacted.

17. The process of claim 16 wherein said process is conducted at from 110°C to 200°C.

18. The process of claim 17 wherein the reaction time is from 2 to 3 minutes.

19. The process of claim 17 wherein said co-chain extender is used at a level of from 5 to 10 moles per 100 moles of said symmetrical chain extender.

20. The process of claim 19 wherein said polyether co-polyol is used at a level of from 5 to 20 parts by weight per 100 parts by weight of the total amount of said polyol.

21. The process of claim 14
A. wherein said polyester polyol is derived from an acid selected from the group consisting of adipic acid, suberic acid, sebacic acid, azelaic acid, and combinations thereof reacted with a glycol selected from the group consisting of 1,4-butanediol, diethylene glycol, 1,6-hexanediol, neopentyl glycol and combinations thereof;
B. wherein said polyether co-polyol is selected from the group consisting of poly (tetramethylene ether glycol), poly (ethylene oxide), poly (propylene oxide), poly (propylene oxide-co-ethylene oxide), and mixtures thereof;
C. wherein said polyisocyanate is a diisocyanate selected from the group consisting of MDI, H₁₂ MDI, and mixtures thereof;
D. wherein said symmetrical chain extender is selected from the group consisting of 1,6-hexanediol, 1,3-propanediol, 1, 5-pentane diol, 1,4-butanediol, 1,4-cyclohexanedimethanol, hydroquinone di (p-hydroxyethyl) ether, 1,4-benzenedimethylol, and mixtures thereof; and
E. wherein said co-chain extender is selected from the group consisting of 1,3-butanediol, neopentyl glycol, diethylene glycol, dipropylene glycol, di (β-hydroxyethyl) resorcinol, 1,2-propylene glycol, and mixture thereof.

## Patentansprüche

1. Thermoplastische Polyurethanzusammensetzung, umfassend:
das Reaktionsprodukt von einem Polyesterpolyol mit einem Zahlenmittel des Molekulargewichts von 500 bis 5000;
1 bis 50 Gewichtsteilen eines Polyether-co-polyols, das Polytetramethylenetherglycol, Polypropylenoxid, Poly(propylenoxid-co-ethylenoxid), Polyethylenoxid oder Kombinationen davon umfasst, pro 100 Gewichtsteile der Gesamtmenge des Polyols; einem Polyisocyanat mit der Formel R(NCO)ₙ,
wobei n eine ganze Zahl von 2 bis 4 ist und R ein aromatischer, cycloaliphatischer, aliphatischer Rest oder Kombinationen davon mit 2 bis 20 Kohlenstoffatomen ist; einem symmetrischen Kettenverlängerer; 1 bis 50 mol eines Cokettenverlängerers, der asymmetrisch ist oder eine andere Kettenlänge hat oder nichtlinear ist oder ein Heteroatom enthält, pro 100 mol des symmetrischen Kettenverlängerers; wobei das Verhältnis der Stoffmenge des Cokettenverlängerers zum Gewichtsprozentanteil des Polyetherpolyols 0,1 bis 10 beträgt.

2. Thermoplastische Polyurethanzusammensetzung gemäß Anspruch 1, wobei der Cokettenverlängerer 1,3-Butandiol, Neopentylglycol, Diethylenglycol, Dipropylenglycol, Di(β-hydroxyethyl)resorcin oder 1,2-Propylenglycol oder Kombinationen davon umfasst und wobei das Reaktionsprodukt einen reduzierten Temperwert Vₜ von 4,0 oder weniger und eine Temperaturempfindlichkeit der komplexen Viskosität V_{ft}(Tₘ+15)/(Tₘ+35)) von 9 oder weniger aufweist.

3. Thermoplastische Polyurethanzusammensetzung gemäß Anspruch 2, wobei der symmetrische Kettenverlängerer 1,6-Hexandiol, 1,3-Propandiol, 1,5-Pentandiol, 1,4-Butandiol, 1,4-Cyclohexandimethanol (CHDM), Hydrochinondi(β-hydroxyethyl)ether (HQEE) oder 1,4-Benzoldimethylol oder Kombinationen davon umfasst;
wobei das Reaktionsprodukt eine Scherempfindlichkeit V_{f} bei Tₘ + 15°C von 10 oder weniger oder ein V_{f} bei Tₘ + 35°C von 5 oder weniger aufweist;
wobei die Menge des Polyether-co-polyols 2 bis 25 Gewichtsteile pro 100 Gewichtsteile des Polyesterpolyols beträgt und wobei das Verhältnis der Stoffmenge des Cokettenverlängerers zum Gewichtsprozentanteil des Polyetherpolyols 0,15 bis 3 beträgt.

4. Thermoplastische Polyurethanzusammensetzung gemäß Anspruch 3, wobei das Zahlenmittel des Molekulargewichts des Polyester-co-polyols 600 bis 4000 beträgt; und
wobei das Zahlenmittel des Molekulargewichts des Polyetherpolyols 250 bis 5000 beträgt; und
wobei das Reaktionsprodukt eine Hydrolysestabilität TS_{N} von 0,3 oder mehr hat.

5. Thermoplastische Polyurethanzusammensetzung gemäß Anspruch 4, wobei das Polyetherpolyol aus der Gruppe ausgewählt ist, die aus Polytetramethylenetherglycol, Polyethylenoxid, Polypropylenoxid, Poly(propylenoxid-co-ethylenoxid) und Gemischen davon besteht.

6. Thermoplastische Polyurethanzusammensetzung gemäß Anspruch 5, wobei es sich bei dem Cokettenverlängerer um Neopentylglycol, Dipropylenglycol, 1,3-Butandiol oder Gemische davon handelt.

7. Thermoplastische Polyurethanzusammensetzung gemäß Anspruch 6, wobei der reduzierte Temperwert Vₜ 3,5 oder weniger beträgt, wobei das V_{f} bei Tₘ + 15°C 6 oder weniger beträgt und das V_{f} bei Tₘ + 35°C 4 oder weniger beträgt, wobei es sich bei dem Polyetherpolyol um Polytetramethylenetherglycol handelt, wobei es sich bei dem Diisocyanat um MDI oder H₁₂MDI oder Kombinationen davon handelt, wobei es sich bei dem symmetrischen Kettenverlängerer um 1,4-Butandiol handelt; und
wobei das Verhältnis der Stoffmenge des Cokettenverlängerers zum Gewichtsprozentanteil des Polyetherpolyols 0,1 bis 10 beträgt; und
wobei es sich bei dem Cokettenverlängerer um 1,3-Butandiol, Neopentylglycol oder Dipropylenglycol handelt.

8. Thermoplastische Polyurethanzusammensetzung gemäß Anspruch 7, wobei das Verhältnis der Stoffmenge des Cokettenverlängerers zum Gewichtsprozentanteil des Polyetherpolyols 0,15 bis 3, vorzugsweise 0,2 bis 2, beträgt.

9. Thermoplastische Polyurethanzusammensetzung gemäß Anspruch 7, wobei das Polyesterpolyol von Adipinsäure, Korksäure, Sebacinsäure oder Azelainsäure oder Kombinationen davon mit 1,4-Butandiol, 1,6-Hexandiol, Neopentylglycol, Diethylenglycol oder Kombinationen davon abgeleitet ist.

10. Thermoplastische Polyurethanzusammensetzung gemäß Anspruch 1, wobei der Cokettenverlängerer in einer Menge von 5 bis 10 mol pro 100 mol des symmetrischen Kettenverlängerers verwendet wird.

11. Thermoplastische Polyurethanzusammensetzung gemäß Anspruch 10, wobei das Polyether-co-polyol in einer Menge von 5 bis 20 Gewichtsteilen pro 100 Gewichtsteile der Gesamtmenge des Polyols verwendet wird.

12. Artikel, der die thermoplastische Polyurethanzusammensetzung gemäß einem der Ansprüche 1 bis 11 umfasst, wobei der Artikel aus einer Folie, einem Film, einem Förderband, einem aufblasbaren Artikel, einem Bekleidungsstück, einem Vorratsbeutel oder einem beschichteten Textilstoff ausgewählt ist, wobei die Beschichtung die thermoplastische Polyurethanzusammensetzung umfasst.

13. Artikel gemäß Anspruch 12, wobei der beschichtete Textilstoff Nylon, Polyester oder Polyolefin umfasst.

14. Verfahren zur Herstellung eines thermoplastischen Polyurethanpolymers, umfassend das Umsetzen von:
A. einem Polyesterpolyol mit einem Zahlenmittel des Molekulargewichts von 500 bis 5000;
B. 1 bis 50 Gewichtsteilen eines Polyether-co-polyols, das Polytetramethylenetherglycol, Polypropylenoxid, Poly(propylenoxid-co-ethylenoxid), Polyethylenoxid oder Kombinationen davon umfasst, pro 100 Gewichtsteile der Gesamtmenge des Polyols;
C. einem Polyisocyanat mit der Formel R(NCO)ₙ, wobei n eine ganze Zahl von 2 bis 4 ist und R ein aromatischer, cycloaliphatischer, aliphatischer Rest oder Kombinationen davon mit 2 bis 20 Kohlenstoffatomen ist;
D. einem symmetrischen Kettenverlängerer;
E. 1 bis 50 mol eines Cokettenverlängerers, der asymmetrisch ist oder eine andere Kettenlänge hat oder nichtlinear ist oder ein Heteroatom enthält, pro 100 mol des symmetrischen Kettenverlängerers;
wobei das Verhältnis der Stoffmenge des Cokettenverlängerers zum Gewichtsprozentanteil des Polyetherpolyols 0,1 bis 10 beträgt.

15. Verfahren gemäß Anspruch 14, das weiterhin einen thermoplastisches-Polyurethan-Katalysator in einer Menge von weniger als 1000 ppm (w/w) des kombinierten Gewichts des Polyesterpolyols, Polyether-co-polyols, Polyisocyanats, symmetrischen Kettenverlängerers und Cokettenverlängerers umfasst.

16. Verfahren gemäß Anspruch 15, wobei das Verfahren in einem Doppelschneckenextruder durchgeführt wird, wo die Reaktanten zusammengebracht und im Wesentlichen gleichzeitig miteinander umgesetzt werden.

17. Verfahren gemäß Anspruch 16, wobei das Verfahren bei 110°C bis 200 °C durchgeführt wird.

18. Verfahren gemäß Anspruch 17, wobei die Reaktionszeit 2 bis 3 Minuten beträgt.

19. Verfahren gemäß Anspruch 17, wobei der Cokettenverlängerer in einer Menge von 5 bis 10 mol pro 100 mol des symmetrischen Kettenverlängerers verwendet wird.

20. Verfahren gemäß Anspruch 19, wobei das Polyether-co-polyol in einer Menge von 5 bis 20 Gewichtsteilen pro 100 Gewichtsteile der Gesamtmenge des Polyols verwendet wird.

21. Verfahren gemäß Anspruch 14:
A. wobei das Polyesterpolyol von einer Säure abgeleitet ist, die aus der Gruppe ausgewählt ist, die aus Adipinsäure, Korksäure, Sebacinsäure, Azelainsäure und Kombinationen davon besteht, welche mit einem Glycol umgesetzt wird, das aus der Gruppe ausgewählt ist, die aus 1,4-Butandiol, Diethylenglycol, 1,6-Hexandiol, Neopentylglycol und Kombinationen davon besteht;
B. wobei das Polyether-co-polyol aus der Gruppe ausgewählt ist, die aus Polytetramethylenetherglycol, Polyethylenoxid, Polypropylenoxid, Poly(propylenoxid-co-ethylenoxid) und Gemischen davon bestent;
C. wobei das Polyisocyanat ein Diisocyanat ist, das aus der Gruppe ausgewählt ist, die aus MDI, H₁₂MDI und Gemischen davon besteht;
D. wobei der symmetrische Kettenverlängerer aus der Gruppe ausgewählt ist, die aus 1,6-Hexandiol, 1,3-Propandiol, 1,5-Pentandiol, 1,4-Butandiol, 1,4-Cyclohexandimethanol, Hydrochinondi(β-hydroxyethyl)ether, 1,4-Benzoldimethylol und Gemischen davon besteht; und
E. wobei der Cokettenverlängerer aus der Gruppe ausgewählt ist, die aus 1,3-Butandiol, Neopentylglycol, Diethylenglycol, Dipropylenglycol, Di(β-hydroxyethyl)resorcin, 1,2-Propylenglycol und Gemischen davon besteht.

## Revendications

1. Composition de polyuréthane thermoplastique comprenant :
le produit réactionnel d'un polyester polyol ayant une masse moléculaire moyenne en nombre de 500 à 5000 ;
de 1 à 50 parties en masse d'un polyéther co-polyol comprenant du poly(tétraméthylène éther glycol), du poly(oxyde de propylène), du poly(oxyde de propylène-co-oxyde d'éthylène), du poly(oxyde d'éthylène) ou des combinaisons de ceux-ci pour 100 parties en masse de la quantité totale dudit polyol ; un polyisocyanate ayant la formule R (NCO)ₙ où n est un entier de 2 à 4 et R est un aromatique, cycloaliphatique, aliphatique ou des combinaisons de ceux-ci ayant de 2 à 20 atomes de carbone ; un extenseur de chaîne symétrique ; de 1 à 50 moles d'un co-extenseur de chaîne qui est asymétrique ou d'une longueur de chaîne différente ou est non linéaire ou contient un co-extenseur de chaîne à hétéroatome(s) pour 100 moles dudit extenseur de chaîne symétrique ; le rapport molaire dudit co-extenseur de chaîne au pourcentage massique dudit polyéther polyol étant de 0,1 à 10.

2. Composition de polyuréthane thermoplastique selon la revendication 1 où ledit co-extenseur de chaîne comprend du 1,3-butanediol, du néopentylglycol, du diéthylèneglycol, du dipropylèneglycol, du di(β-hydroxyéthyl)résorcinol ou du 1,2-propylèneglycol, ou des combinaisons de ceux-ci ; et où ledit produit réactionnel a une valeur de condensation réduite, Vₜ, de 4,0 ou moins et une sensibilité de la viscosité complexe à la température V_{ft} ((Tₘ + 15)/(Tₘ + 35)) de 9 ou moins.

3. Composition de polyuréthane thermoplastique selon la revendication 2 où ledit extenseur de chaîne symétrique comprend du 1,6-hexanediol, du 1,3-propanediol, du 1,5-pentanediol, du 1,4-butanediol, du 1,4-cyclohexanediméthanol (CHDM), de l'hydroquinone di(p-hydroxyéthyl) éther (HQEE) ou du 1,4-benzènediméthylol ou des combinaisons de ceux-ci ;
où ledit produit réactionnel a une sensibilité au cisaillement V_{f} à Tₘ + 15°C de 10 ou moins ou une V_{f} à Tₘ + 35°C de 5 ou moins ;
où la quantité dudit polyéther co-polyol est de 2 à 25 parties en masse pour 100 parties en masse dudit polyester polyol, et où ledit rapport molaire dudit co-extenseur de chaîne au pourcentage massique dudit polyéther polyol est de 0,15 à 3.

4. Composition de polyuréthane thermoplastique selon la revendication 3 où la masse moléculaire moyenne en nombre dudit polyester copolyol est de 600 à 4000 ; et
où la masse moléculaire moyenne en nombre dudit polyéther polyol et de 250 à 5000, et
où ledit produit réactionnel a une stabilité hydrolytique TS_{N} de 0,3 ou plus.

5. Composition de polyuréthane thermoplastique selon la revendication 4 où ledit polyéther polyol est choisi dans le groupe consistant en le poly(tétraméthylène éther glycol), le poly(oxyde d'éthylène), le poly(oxyde de propylène), le poly(oxyde de propylène-co-oxyde d'éthylène) et leurs mélanges.

6. Composition de polyuréthane thermoplastique selon la revendication 5 où ledit co-extenseur de chaîne est le néopentylglycol, le dipropylèneglycol, le 1,3-butanediol ou des mélanges de ceux-ci.

7. Composition de polyuréthane thermoplastique selon la revendication 6 où ladite valeur de condensation réduite, Vₜ est 3,5 ou moins, où ladite V_{f} à Tₘ + 15°C est 6 ou moins et ladite V_{f} à Tₘ + 35°C est 4 ou moins, où ledit polyéther polyol est le poly(tétraméthylène éther glycol), où ledit diisocyanate est le MDI ou le H₁₂MDI, ou des combinaisons de ceux-ci, où ledit extenseur de chaîne symétrique est le 1,4-butanediol ; et
où le rapport molaire dudit co-extenseur de chaîne au pourcentage massique dudit polyéther polyol est de 0,1 à 10 ; et
où ledit co-extenseur de chaîne est le 1,3-butanediol, le néopentylglycol ou le dipropylèneglycol.

8. Composition de polyuréthane thermoplastique selon la revendication 7 où le rapport molaire dudit co-extenseur de chaîne au pourcentage massique dudit polyéther polyol est de 0,15 à 3, de préférence de 0,2 à 2.

9. Composition de polyuréthane thermoplastique selon la revendication 7 où ledit polyester polyol est dérivé de l'acide adipique, de l'acide subérique, de l'acide sébacique, ou de l'acide azélaïque, ou de combinaisons de ceux-ci avec le 1,4-butanediol, le 1,6-hexanediol, le néopentylglycol, le diéthylèneglycol, ou de combinaisons de ceux-ci.

10. Composition de polyuréthane thermoplastique selon la revendication 1 où ledit co-extenseur de chaîne est utilisé à un niveau de 5 à 10 moles pour 100 moles dudit extenseur de chaîne symétrique.

11. Composition de polyuréthane thermoplastique selon la revendication 10 où ledit polyéther co-polyol est utilisé à un niveau de 5 à 20 parties en masse pour 100 parties en masse de la quantité totale dudit polyol.

12. Article comprenant la composition de polyuréthane thermoplastique selon l'une quelconque des revendications 1 à 11 où ledit article est choisi parmi une feuille, un film, une bande transporteuse, un article gonflable, un vêtement, un sac de stockage ou une étoffe revêtue où ledit revêtement comprend ladite composition de polyuréthane thermoplastique.

13. Article selon la revendication 12 où ladite étoffe revêtue comprend du nylon, du polyester ou une polyoléfine.

14. Procédé pour produire un polymère de polyuréthane thermoplastique comprenant la réaction de :
A. un polyester polyol ayant une masse moléculaire moyenne en nombre de 500 à 5000 ;
B. de 1 à 50 parties en masse d'un polyéther co-polyol comprenant du poly(tétraméthylène éther glycol), du poly(oxyde de propylène), du poly(oxyde de propylène-co-oxyde d'éthylène), du poly(oxyde d'éthylène) ou des combinaisons de ceux-ci pour 100 parties en masse de la quantité totale dudit polyol ;
C. un polyisocyanate ayant la formule R (NCO)ₙ où n est un entier de 2 à 4 et R est un aromatique, cycloaliphatique, aliphatique ou des combinaisons de ceux-ci ayant de 2 à 20 atomes de carbone ;
D. un extenseur de chaîne symétrique ;
E. de 1 à 50 moles d'un co-extenseur de chaîne qui est asymétrique ou d'une longueur de chaîne différente ou est non linéaire ou contient un co-extenseur de chaîne à hétéroatome(s) pour 100 moles dudit extenseur de chaîne symétrique ; et
où le rapport molaire dudit co-extenseur de chaîne au pourcentage massique dudit polyéther polyol est de 0,1 à 10.

15. Procédé selon la revendication 14 comprenant en outre un catalyseur de polyuréthane thermoplastique en une quantité inférieure à 1000 parties en masse par million de parties en masse de la masse combinée desdits polyester polyol, polyéther co-polyol, polyisocyanate, extenseur de chaîne symétrique et dudit co-extenseur de chaîne.

16. Procédé selon la revendication 15 où ledit procédé est mis en oeuvre dans une extrudeuse à deux vis où les réactifs sont combinés et mis à réagir sensiblement simultanément.

17. Procédé selon la revendication 16 où ledit procédé est mis en oeuvre à 110°C à 200°C.

18. Procédé selon la revendication 17 où la durée de réaction est de 2 à 3 minutes.

19. Procédé selon la revendication 17 où ledit co-extenseur de chaîne est utilisé à un niveau de 5 à 10 moles pour 100 moles dudit extenseur de chaîne symétrique.

20. Procédé selon la revendication 19 où ledit polyéther co-polyol est utilisé à un niveau de 5 à 20 parties en masse pour 100 parties en masse de la quantité totale dudit polyol.

21. Procédé selon la revendication 14
A. où ledit polyester polyol est dérivé d'un acide choisi dans le groupe consistant en l'acide adipique, l'acide subérique, l'acide sébacique, l'acide azélaïque et leurs combinaisons mis à réagir avec un glycol choisi dans le groupe consistant en le 1,4-butanediol, le diéthylèneglycol, le 1,6-hexanediol, le néopentylglycol et leurs combinaisons ;
B. où ledit polyéther co-polyol est choisi dans le groupe consistant en le poly(tétraméthylène éther glycol), le poly(oxyde d'éthylène), le poly(oxyde de propylène), le poly(oxyde de propylène-co-oxyde d'éthylène), et leurs mélanges ;
C. où ledit polyisocyanate est un diisocyanate choisi dans le groupe consistant en le MDI, le H₁₂MDI et leurs mélanges ;
D. où ledit extenseur de chaîne symétrique est choisi dans le groupe consistant en le 1,6-hexanediol, le 1,3-propanediol, le 1,5-pentanediol, le 1,4-butanediol, le 1,4-cyclohexanediméthanol, l'hydroquinone di(β-hydroxyéthyl) éther, le 1,4-benzènediméthylol et leurs mélanges ; et
E. où ledit co-extenseur de chaîne est choisi dans le groupe consistant en le 1,3-butanediol, le néopentylglycol, le diéthylèneglycol, le dipropylèneglycol, le di(β-hydroxyéthyl)résorcinol, le 1,2-propylèneglycol et leurs mélanges.
